# EUROPEAN PATENT APPLICATION

(11) **EP 2 750 075 A1**
(43) Date of publication of application: **02.07.2014**
(21) Application number: 12199381.0
(22) Date of filing: 27.12.2012
(51) Int. Cl.: G06F 21/88, G08B 13/14

(54) **Activating a charging lock**

(71) Applicant: Nokia Corporation, 02610 Espoo (FI)
(72) Inventor: Coyle-Gilchrist, Matthew, London, W1F 9NB (GB)
(74) Representative: Nokia Corporation

(57) **Abstract**

An apparatus, method, and computer program product for: detecting a wireless charging field and, in response to detecting the wireless charging field, activating a charging lock of a mobile computing device.

## Description

### TECHNICAL FIELD

The present application relates generally to activating a charging lock of an apparatus.

### BACKGROUND

Electronic devices typically contain personal and sometimes even valuable information. Usually it is desirable to try to reduce the risk of electronic devices ending up in wrong hands.

### SUMMARY

Various aspects of examples of the invention are set out in the claims.

According to a first aspect of the present invention, there is provided a method comprising detecting a wireless charging field and in response to detecting the wireless charging field, activating a charging lock of a device.

According to a second aspect of the present invention, there is provided an apparatus comprising a processor, memory including computer program code, the memory and the computer program code configured to, working with the processor, cause the apparatus to perform at least the following: detect a wireless charging field and in response to detecting the wireless charging field, activate a charging lock of a device.

According to a third aspect of the present invention, there is provided a computer program product comprising a computer-readable medium bearing computer program code embodied therein for use with a computer, the computer program code comprising code for detecting a wireless charging field and code for, in response to detecting the wireless charging field, activating a charging lock of a device.

According to a fourth aspect of the present invention there is provided an apparatus, comprising means for detecting a wireless charging field and means for, in response to detecting the wireless charging field, activating a charging lock of a device.

### BRIEF DESCRIPTION OF THE DRAWINGS

For a more complete understanding of example embodiments of the present invention, reference is now made to the following descriptions taken in connection with the accompanying drawings in which:

FIGURE 1 shows a block diagram of an example apparatus in which examples of the disclosed embodiments may be applied;

FIGURE 2 shows a block diagram of another example apparatus in which examples of the disclosed embodiments may be applied;

FIGURES 3a and 3b illustrate a user interface in accordance with an example embodiment of the invention;

FIGURE 4 illustrate an example method incorporating aspects of example embodiments of the invention.

### DETAILED DESCRIPTON OF THE DRAWINGS

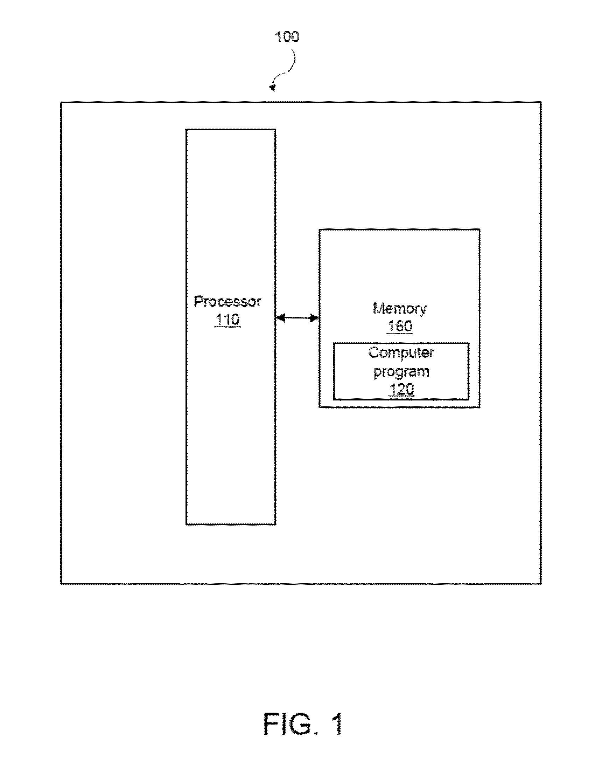

Example embodiments of the present invention and its potential advantages are understood by referring to FIGURES 1 through 4 of the drawings.

Example embodiments relate to activating a charging lock of a device. According to an example embodiment the charging lock is activated in response to detecting a wireless charging field. The wireless charging field may be detected by detecting a charging state of the device. Alternatively, the wireless charging field may be detected based on a signal received from a wireless charger or a unit associated with the wireless charger. A further example may be a mechanical arrangement with the wireless charger which engages a switch on the device when the device is placed onto the wireless charger. Some example embodiments may also comprise sounding an alarm in response to detecting that the device is removed from the wireless charging field while the charging lock is activated.

FIGURE 1 is a block diagram depicting an apparatus 100 operating in accordance with an example embodiment of the invention. The apparatus 100 may, for example, be an electronic device such as a chip or a chip-set. The apparatus 100 includes a processor 110 and a memory 160. In other examples, the apparatus 100 may comprise multiple processors.

In the example of FIGURE 1, the processor 110 is a control unit operatively connected to read from and write to the memory 160. The processor 110 may also be configured to receive control signals received via an input interface and/or the processor 110 may be configured to output control signals via an output interface. In an example embodiment the processor 110 may be configured to convert the received control signals into appropriate commands for controlling functionalities of the apparatus.

The memory 160 stores computer program instructions 120 which when loaded into the processor 110 control the operation of the apparatus 100 as explained below. In other examples, the apparatus 100 may comprise more than one memory 160 or different kinds of storage devices.

Computer program instructions 120 for enabling implementations of example embodiments of the invention or a part of such computer program instructions may be loaded onto the apparatus 100 by the manufacturer of the apparatus 100, by a user of the apparatus 100, or by the apparatus 100 itself based on a download program, or the instructions can be pushed to the apparatus 100 by an external device. The computer program instructions may arrive at the apparatus 100 via an electromagnetic carrier signal or be copied from a physical entity such as a computer program product, a memory device or a record medium such as a Compact Disc (CD), a Compact Disc Read-Only Memory (CD-ROM), a Digital Versatile Disk (DVD) or a Blu-ray disk.

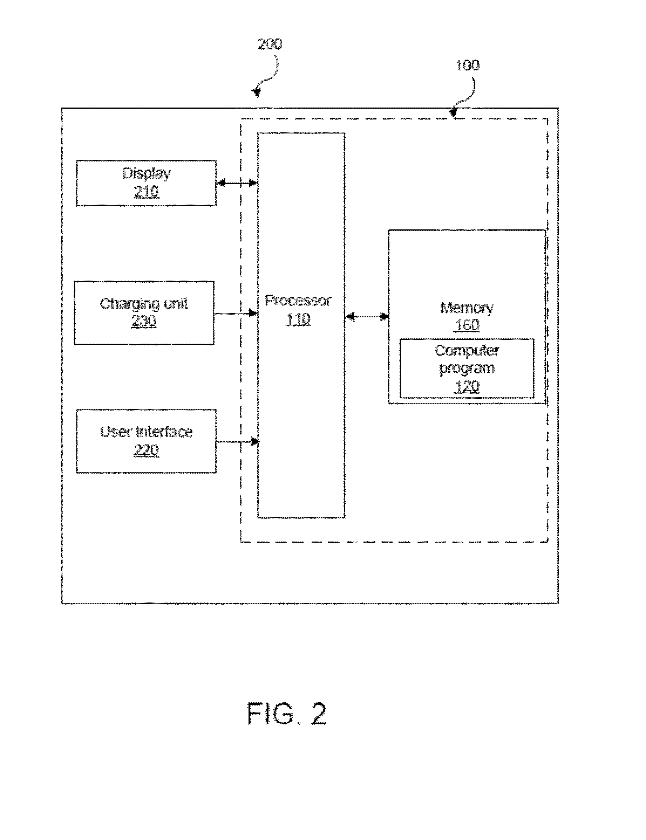

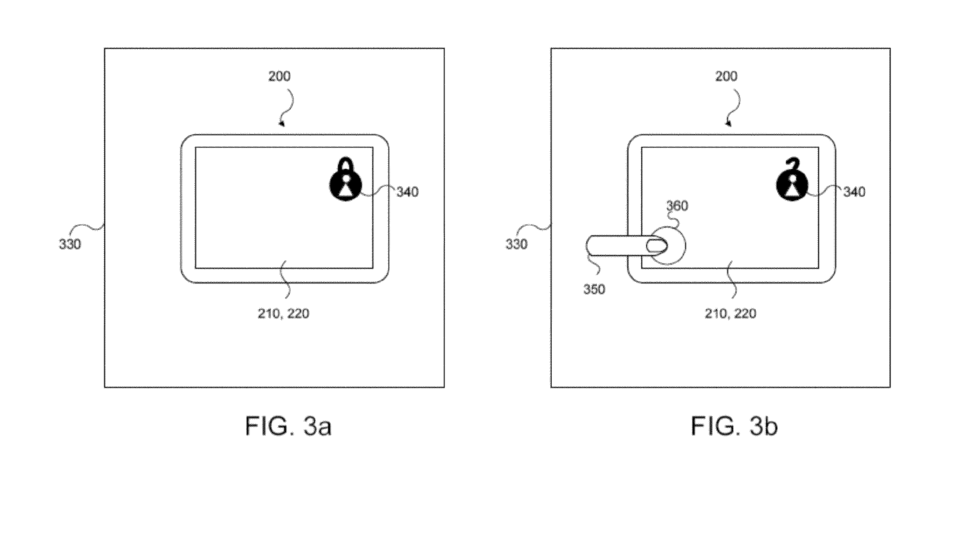

FIGURE 2 is a block diagram depicting an apparatus 200 in accordance with an example embodiment of the invention. The apparatus 200 may be an electronic device such as a hand-portable device, a mobile phone or a Personal Digital Assistant (PDA), a Personal Computer (PC), a laptop, a desktop, a tablet computer, a wireless terminal, a communication terminal, a game console, a music player, an electronic book reader (e-book reader), a positioning device, a digital camera, a CD, DVD or Blu-ray - player, or a media player. In the examples of Figs. 2 and 3 it is assumed that the apparatus 200 is a mobile computing device.

In this example, the mobile computing device 200 is illustrated as comprising the apparatus 100, a display 210, a user interface 220 and a charging unit 230. However, the display 210 and/or user interface 220 may be external to the apparatus 200 but in communication with it. In some example embodiments the display 210 may be incorporated into the user interface 220: for example, the user interface 220 may include a touch screen display.

In the example of FIGURE 2 the user interface 220 is configured to enable inputting and accessing information in the mobile computing device 200. According to an example embodiment, the user interface 220 comprises a surface capable of receiving user inputs. The surface may be an input surface such as a touch screen or a touch pad. In some example embodiments, the mobile computing device 200 may include both a touch screen and a touch pad or multiple surfaces capable of receiving user inputs. A touch screen may be configured not to only enable accessing and/or inputting information but also to display user interface objects, while a touch pad may be configured to enable accessing and/or inputting information and a separate display may be provided. In some example embodiments, no display is provided. A user may input and access information by using a suitable input means such as a pointing means, one or more fingers, a stylus or a digital pen.

In an example embodiment, inputting and accessing information is performed by touching the surface such as the surface of a touch screen display 210 or a touch pad. Additionally or alternatively, proximity of an input means such as a finger or a stylus may be detected and inputting and accessing information may be performed by hovering the finger or the stylus over the surface. In a further example embodiment the surface may be a multi-touch surface configured to detect multiple at least partially concurrent touches on the surface.

A touch screen or a touch pad may be based on one or more of several different technologies. For example, different touch screen and pad technologies include resistive, capacitive, Surface Acoustic Wave (SAW), infrared, strain gauge, optical imaging, dispersive signal technology and acoustic pulse recognition touch screens. A touch screen or a touch pad may also operate using a combination of different technologies.

Additionally or alternatively, the user interface 220 may also comprise a manually operable control such as a button, a key, a touch pad, a joystick, a stylus, a pen, a roller, a rocker, a keypad, a keyboard or any suitable input mechanism for inputting and/or accessing information. Further examples include a microphone, a speech recognition system, eye movement recognition system, acceleration-, tilt- and/or movement-based input systems.

The charging unit 230 is configured to charge a battery of the mobile computing device 200 in response to an inductive coupling with a wireless charger. In this example the wireless charger embodies one or more transmitter coils configured to produce an electromagnetic field by a flowing electrical current within the one or more coils. The electromagnetic field may be a combination of an electric field and a magnetic field. In some examples, the electromagnetic field may only comprise a magnetic field or the magnetic field component may be significantly stronger than the electric field component. In some examples, the electric field component may be more dominant than the magnetic field. The properties of the electromagnetic field may depend, for example, on the distance between the wireless charger and the charging unit. The electromagnetic field is passed through one or more receiver coils of the mobile computing device 200, in which a current is induced by the electromagnetic field. The induced current is then used for charging the battery of the mobile computing device 200. In some examples the mobile computing device 200 may be placed on or next to the wireless charger to initiate wireless charging.

In an example embodiment, the charging unit 230 comprises one or more receiver coils, a charging circuit operatively connected to the one or more receiver coils, and one or more operative connections to the processor 110 and/or the wireless charger.

The charging unit 230 may further be configured to communicate with the wireless charger. For example, the charging unit may be configured to transmit a signal to the wireless charger indicating, for example, the strength of the received charging field, an identifier of a receiver coil and/or charging unit, an indication of required charging field strength, and/or control data for adapting power transfer from the wireless charger.

In some example embodiments the charging unit 230 may be configured to guide a user to place the mobile computing device in an optimal position with respect to the wireless charger. An optimal position may comprise a position in which the receiver coil picks up as much as possible of the electromagnetic field transmitted by the wireless charger. Therefore, the optimal position may comprise a position in which the receiver coil captures as many field lines of the electromagnetic field as possible, for example to enable charging to proceeding as rapidly as possible. For example, the charging unit 230 may comprise an additional magnet configured to provide haptic feedback (e.g. a pulling force) or the processor 110 may be configured to cause providing visual, audible or any other appropriate feedback to guide a user to place the mobile computing device 200 in an optimal position with respect to the wireless charger. However, in some example embodiments the wireless charger may comprise a moving transmitter coil or an array of transmitter coils in which case means for guiding a user may not necessarily be needed.

Referring back to the example of Fig.2, in addition to a display, the mobile computing device 200 may include another kind of an output device such as a tactile feedback system for presenting tactile and/or haptic information for a user. The tactile feedback system may be configured to receive control signals provided by the processor 110. The tactile feedback system may be configured to indicate a completed operation or to indicate selecting an operation, for example. In an example embodiment a tactile feedback system may cause the mobile computing device 200 to vibrate in a certain way to inform a user of an activated and/or completed operation.

In the example of FIGURE 2, the mobile computing device 200 is configured to detect a wireless charging field such as an electromagnetic field produced by a wireless charger. The wireless charging field may be detected by the apparatus 100, for example, by detecting a charging state of the mobile computing device 200, by receiving a signal from a wireless charger, or by detecting that the mobile computing device 200 is operatively connected to the wireless charger such as placed on the wireless charger. The apparatus 100 may be configured to detect the charging state of the mobile computing device 200 by, for example, detecting current induced by an electromagnetic field in one or more receiver coils of the mobile computing device 200 or voltage induced across the one or more receiver coils. As a further example, the wireless charging field may be detected by a mechanical arrangement with the wireless charger which engages, for example, a switch on the device when the device is placed onto the wireless charger.

According to an example embodiment, the apparatus 100 is configured to activate a charging lock of the mobile computing device 200 in response to detecting the wireless charging field. The charging lock may comprise an application proving one or more lock mode functionalities such as limiting access to the mobile computing device 200, activating an alarm, disabling particular functions within the mobile computing device 200 and/or providing any other appropriate functionalities.

Without limiting the scope of the claims, an advantage of activating a charging lock in response to detecting a wireless charging field may be that the charging lock is activated automatically. In other words, a user does not need to remember to activate the charging lock and the user does not need to do that manually. For example, when charging the mobile computing device 200 in a public place, the user does not need to worry about activating the charging lock.

According to an example embodiment, the mobile computing device 200 is configured to sound an alarm in dependence on the activated charging lock. For example, the apparatus 100 may be configured to sound the alarm in response to detecting that the mobile computing device 200 is removed from the wireless charging field while the charging lock is activated. The apparatus 100 may cause sounding the alarm using a built-in speaker within the mobile computing device 200.

In an example embodiment, removal of the mobile computing device 200 from the wireless charging field may be detected by the apparatus 100 by detecting absence of an electromagnetic field. The apparatus 100 may be configured to detect absence of an electromagnetic field by detecting a non-charging state of the mobile computing device 200, by receiving a signal from a wireless charger, or by detecting that the mobile computing device 200 is not operatively connected to the wireless charger. A non-charging state of the mobile computing device 200 may be detected by the apparatus 100 by receiving an indication of substantially reduced induced current flow in the one or more receiver coils or substantially reduced voltage across the one or more receiver coils.

Without limiting the scope of the claims, an advantage of sounding an alarm is that, for example, in a public place the user's and other people's attention is drawn to the mobile computing device 200 if the device is removed from the wireless charging field. Another advantage is that since the wireless charging field in some applications may not extend far and the alarm is sound in response to detecting that the mobile computing device 200 is removed from the wireless charging field, the alarm may be sounded almost immediately in response to removing the device from the close proximity of the wireless charger.

According to an example embodiment, activating the charging lock comprises activating an application program. The application program may be a dedicated alarm application or the application program may be some other application containing an alarm functionality such as a calendar application. The alarm application may be configured to perform dedicated charging lock tasks such as to monitor a charging and/or non-charging state of the mobile computing device 200. For example, the activated alarm application may be configured to sound an alarm in response to detecting a non-charging state of the mobile computing device 200. In some example embodiments an activated alarm application may be considered as a criterion for sounding an alarm. Hence, if the mobile computing device 200 is placed on a wireless charger and a non-charging state of the device is detected by the apparatus 100, depending on whether the alarm application is activated or not, an alarm may or may not be sounded, respectively.

According to an example embodiment, the mobile computing device 200 is configured to prevent activating the charging lock and/or cancel the alarm in response to detecting by the apparatus 100 that a location is safe. For example, the apparatus100 may be configured to detect or receive an indication of a pre-defined safe location based on a Global Positioning System (GPS) signal, a signal indicating a Global System for Mobile Communications (GSM) cell, or a pre-defined Wireless Local Area Network (WLAN).

The apparatus 100 may also be configured to determine a safe location based on a signal from the wireless charger. For example, the signal from the wireless charger may incorporate information indicating the safe location or the signal indicating a charging state may be manipulated by the wireless charger (e.g. stopping and starting the charging signal briefly when the charging begins). As a further example, a safe location may be indicated by the wireless charger using a communication channel such as Near Field Communication (NFC) if the mobile computing device 200 is NFC enabled.

It may also be possible that a safe location is detected by the apparatus 100 based on a detected user action. A user may perform a pre-defined action to prevent activating the charging lock and/or cancel the alarm when placing the mobile computing device 200 on a wireless charger. For example, placing the mobile computing device 200 in a particular orientation (e.g. upside down), or performing a gesture such as tapping a display of the mobile computing device 200 in a certain way may cause cancelling the alarm. The charging lock may be prevented and/or the alarm may be cancelled until a predefined criterion is fulfilled. For example, the charging lock may be prevented and/or the alarm cancelled for a pre-defined period of time, until receiving an indication by the apparatus 100 that a battery level exceeds a pre-determined threshold value or until a threshold time has elapsed since the last charge.

Without limiting the scope of the claims, an advantage of preventing activating the charging lock and/or cancelling the alarm until a criterion is fulfilled may be that, for example, a user could pick up the mobile computing device 200 and put it down repeatedly without needing to disable the charging lock and/or the alarm every time.

According to an example embodiment, the charging lock may be deactivated by the user. For example, the user may input a touch gesture (e.g. a gesture of a particular type and/or by a particular number of fingers) or a motion gesture (e.g. shaking the device), or some other kind of input such as a PIN code to deactivate the charging lock.

FIGURES 3a and 3b illustrate an example user interface incorporating aspects of the disclosed embodiments. In this example, the user interface may be comprised by the mobile computing device 200 of the example of FIGURE 2. The mobile computing device comprises a touch screen display 210 incorporated into the user interface 220.

In the example of FIGURE 3a, a user has placed the mobile computing device 200 on a wireless charger 330. The wireless charger 330 comprises a transmitter coil to generate a wireless charging field in terms of an electromagnetic field and the mobile computing device 200 comprises a receiver coil to receive the electromagnetic field and to induce charging current. In response to detecting the wireless charging field by the mobile computing device 200, a charging lock of the device is activated as indicated by a charging lock icon 340. The charging lock icon may be presented by an alarm application or any other application with an alarm capability such as a calendar application. In the example of FIGURE 3a, in case the mobile computing device 200 is removed from the wireless charging field while the charging lock is activated, an alarm is sound by the mobile computing device 200.

In the example of FIGURE 3b, a user deactivates the charging lock by performing a touch gesture 360 by a finger 350. It should be noted that the circle 360 illustrating a touch gesture is for illustrative purposes only and it may not be visible to the user. In this example, the changed charging lock icon 340 reflects the deactivated charging lock. After deactivating the charging lock, a user may remove the mobile computing device 200 from the wireless charging field generated by the wireless charger 330 without causing the alarm to be sounded.

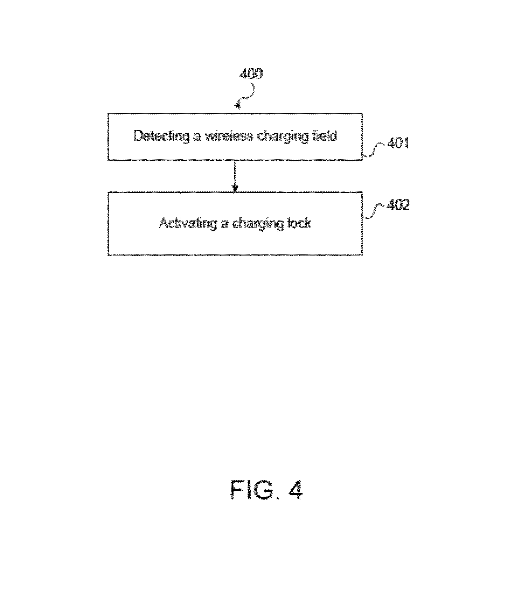

FIGURE 4 illustrates an example method 400 incorporating aspects of the previously disclosed embodiments. More specifically the example method 400 illustrates activating a charging lock.

The method starts with detecting 401 a wireless charging field . As explained earlier, detecting the wireless charging field may comprise, for example, detecting a charging state of a device, which in turn may be detected by detecting current induced by an electromagnetic field in one or more receiver coils of the device or detecting voltage induced across the one or more receiver coils.

The method continues with activating 402 a charging lock of a device in response to detecting the wireless charging field. In some examples, activating a charging lock may comprise activating an application program. The method may further comprise sounding an alarm in response to detecting that the device is removed from the wireless charging field while the charging lock is activated. The method may also comprise preventing activating the charging lock or cancelling sounding the alarm in response to detecting that the location is safe.

Without in any way limiting the scope, interpretation, or application of the claims appearing below, a technical effect of one or more of the example embodiments disclosed herein may be improved security when charging an apparatus on a wireless charger. For example, activating a charging lock automatically may reduce the risk of a user forgetting to activate a charging lock and it may also be less burdensome for user, since the user does not need to activate the lock manually. In other words, the charging lock may be set as a default and when a user wishes to deviate from the default, then user operation is needed. Another technical effect of one or more of the example embodiments disclosed herein is sounding an alarm almost immediately, since it may be that the wireless charging field does not extend far or removing the device from wireless charging field can be detected quickly. In some examples, an alarm may be sound when it is detected by the device that the strength of the wireless charging field changes, for example, more than a predefined threshold value.

Embodiments of the present invention may be implemented in software, hardware, application logic or a combination of software, hardware and application logic. The software, application logic and/or hardware may reside on the apparatus, a separate device or a plurality of devices. If desired, part of the software, application logic and/or hardware may reside on the apparatus, part of the software, application logic and/or hardware may reside on a separate device, and part of the software, application logic and/or hardware may reside on a plurality of devices. In an example embodiment, the application logic, software or an instruction set is maintained on any one of various conventional computer-readable media. In the context of this document, a 'computer-readable medium' may be any media or means that can contain, store, communicate, propagate or transport the instructions for use by or in connection with an instruction execution system, apparatus, or device, such as a computer, with one example of a computer described and depicted in FIGURE 2. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the above-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the above describes example embodiments of the invention, these descriptions should not be viewed in a limiting sense. Rather, there are several variations and modifications which may be made without departing from the scope of the present invention as defined in the appended claims.

## Claims

1. A method comprising:
- detecting a wireless charging field; and
- in response to detecting the wireless charging field, activating a charging lock of a device.

2. A method according to claim 1, wherein detecting the wireless charging field comprises detecting a charging state of the device.

3. A method according to claim 2, wherein detecting the charging state of the device comprises detecting current induced by an electromagnetic field in one or more receiver coils or detecting induced voltage across the one or more receiver coils.

4. A method according to claim 1, wherein the method further comprises sounding an alarm in response to detecting that the device is removed from the wireless charging field while the charging lock is activated.

5. A method according to claim 1, wherein activating the charging lock comprises activating an application program.

6. A method according to claim 1, wherein the method further comprises preventing activating the charging lock in response to detecting that the location is safe.

7. A method according to claim 6, wherein detecting a safe location comprises at least one of the following: detecting a pre-defined location based on , detecting a pre-defined Wireless LAN network, detecting a safe location based on a wireless charging signal or detecting a safe location based on a detected user action.

8. An apparatus, comprising:
a processor,
memory including computer program code, the memory and the computer program code configured to, working with the processor, cause the apparatus to perform at least the following:
- detect a wireless charging field; and
- in response to detecting the wireless charging field, activate a charging lock of a device.

9. An apparatus according to claim 8, wherein the memory and the computer program code are configured to, working with the processor, detect a charging state of the device.

10. An apparatus according to claim 9, wherein the memory and the computer program code are configured to, working with the processor, detect current induced by an electromagnetic field in one or more receiver coils or voltage induced across the one or more receiver coils.

11. An apparatus according to claim 8, wherein the memory and the computer program code are configured to, working with the processor, sound an alarm in response to detecting that the device is removed from the wireless charging field while the charging lock is activated.

12. An apparatus according to claim 8, wherein the memory and the computer program code are configured to, working with the processor, prevent activating the charging lock in response to detecting that the location is safe.

13. An apparatus according to claim 12, wherein the memory and the computer program code are configured to, working with the processor, detect the safe location by at least one of the following: detecting a pre-defined location of the device, detecting a pre-defined Wireless LAN network, based on a wireless charging signal and based on a detected user action.

14. An apparatus according to claim 8, wherein the device comprises the apparatus.

15. A computer program product comprising a computer-readable medium bearing computer program code embodied therein for use with a computer, the computer program code comprising:
code for detecting a wireless charging field; and
code for, in response to detecting the wireless charging field, activating a charging lock of a device.
